# EUROPÄISCHE PATENTSCHRIFT

(11) **EP 0 857 559 B1**
(45) Veröffentlichungstag und Bekanntmachung des Hinweises auf die Patenterteilung: **08.05.2002**
(21) Anmeldenummer: 98100576.2
(22) Anmeldetag: 15.01.1998
(51) Int. Cl.: B29C 47/52, B29C 47/76

(54) **Zahnradextruder**
Toothed wheel extruder
Extrudeuse roue dentée

(30) Priorität: 01.02.1997 DE 19703798
(43) Veröffentlichungstag der Anmeldung: 12.08.1998
(73) Patentinhaber: Berstorff GmbH, 30625 Hannover (DE)
(72) Erfinder: Hepke, Harald, Dipl.-Ing., 30655 Hannover (DE)
(74) Vertreter: Meissner, Peter E., Dipl.-Ing.

(56) Entgegenhaltungen:
- EP-A- 0 438 645
- EP-A- 0 508 079
- EP-A- 0 839 630

## Beschreibung

Die Erfindung betrifft einen Zahnradextruder zum Plastifizieren und Homogenisieren von Kautschukmischungen mit in zwei Kammern des Extrudergehäuses angeordneten Zahnrädern, deren Verzahnungen ineinander greifen und mit einer vor den Zahnrädern im Extrudergehäuse vorgesehenen Zuführöffnung für die Kautschukmischung.

Es ist bereits bekannt, als Zahnradextruder ausgebildete Zahnradpumpen zur Plastifizierung von Kunststoffgranulaten zu verwenden (DE-OS 24 38 013). Bekannt geworden ist es auch bereits, Zahnradextruder zum Plastifizieren und Homogenisieren von Kautschukmischungen einzusetzen, wobei die Zahnradextruder mit kalten Kautschukstreifen gefüttert werden. Ein derartiger Einsatz von Kautschukextrudern ist in der Fachzeitschrift Gummi, Fasern, Kunststoffe 11/1996, Seiten 880 und 881, beschrieben.

Wie sich nunmehr gezeigt hat, sind Zahnradextruder, sofern es gelingt, den schwankenden Volumenstrom zu stabilisieren, auch geeignet, mittels eines am Zahnradextruder angeordneten Spritzkopfes nicht nur Vorprofile für die Weiterverarbeitung, sondern auch Fertigprofile zu extrudieren. Insbesondere bei der Herstellung fertiger Profile ist es jedoch erforderlich, die in der Kautschukmischung enthaltenen flüchtigen Bestandteile und die Feuchtigkeit weitgehendst zu entfernen. Mittels der herkömmlichen Zahnradextruder ist dieses jedoch nicht möglich.

Ein Zahnradextuder mit Mitteln zum Absaugen eventueller Lufteinschlüsse im Material ist aus dem Dokument EP-A-0 839 630 bekannt. Der Erfindung liegt die Aufgabe zugrunde, einen Zahnradextruder so auszubilden, daß während des Extrusionsvorganges die in der Kautschukmischungen enthaltenen flüchtigen Bestandteile und die Feuchtigkeit weitgehend entfernt werden können.

Diese Aufgabe wird erfindungsgemäß durch die Merkmale des Anspruchs 1 gelöst. Die weitere Ausgestaltung der Erfindung, ist den Unteransprüchen zu entnehmen.

Erfindungsgemäß ist es vorgesehen, daß im Extrudergehäuse stimseitig der Verzahnungen der Zahnräder in einem Bereich, in dem die Verzahnungen außer Eingriff kommen oder/und daß eintrittsseitig der mit der Kautschukmischung gefüllten Verzahnungen, in einem sich eintrittsseitig über maximal die Hälfte des Umfangs der Kammern erstreckenden Bereich, im Extrudergehäuse Entgasungsöffnungen vorgesehen sind. Durch eine derartige Anordnung von Entgasungsöffnungen in drucklosen Bereichen bzw. Bereichen geringen Überdrucks ist es möglich geworden, die Kautschukmischung derart zu belüften, daß in ihr enthaltene flüchtige Bestandteile und Feuchtigkeit entgast werden können und daß gleichzeitig die Kautschukmischung nicht in die Entgasungsöffnungen eintreten und diese verstopfen kann.

Gemäß einer bevorzugten Ausführungsform der Erfindung ist es vorgesehen, daß die Entgasungsöffnungen einseitig der Zahnräder angeordnet sind und daß die Verzahnungen der Zahnräder als Schrägverzahnung ausgebildet und so gerichtet sind, daß die Kautschukmischung in den Verzahnungen von den stirnseitig angeordneten Entgasungsöffnungen wegbewegt wird. Es ist somit sichergestellt, daß die zu extrudierende Kautschukmischung nicht in die Entgasungsöffnungen eintreten kann. Bei einer derartigen Ausbildung der Verzahnungen der Zahnräder ist es sogar möglich, die in den Verzahnungen befindliche Kautschukmischung auch in Bereichen geringen Überdrucks sehr wirksam zu entgasen.

Der gleiche Effekt wird erreicht, wenn die Entgasungsöffnungen gemäß einer weiteren bevorzugten Ausführungsform der Erfindung beidseitig der Zahnräder angeordnet sind und wenn die Verzahnungen der Zahnräder als Pfeilverzahnung ausgebildet und so gerichtet sind, daß die Kautschukmischung in den Verzahnungen von den Stirnflächen, an denen die Entgasungsöffnungen angeordnet sind, wegbewegt wird. Auch hier wird erreicht, daß die Kautschukmischung nicht in die Entgasungsöffnung eintreten kann.

Im Rahmen der Erfindung ist es weiterhin vorgesehen, daß die Entgasungsöffnungen, die in dem Bereich, in dem die Verzahnungen außer Eingriff kommen, angeordnet sind, als Bohrungen ausgebildet sind. Hier ergibt sich eine fertigungstechnisch besonders einfache Lösung.

Weiterhin kann es vorteilhaft sein, wenn die im Umfangsbereich der Kammern angeordneten Entgasungsöffnungen als Taschen ausgebildet sind, die sich über einen Bereich des Umfangs erstrecken, der mehreren Zähnen der Verzahnung der Zahnräder entspricht. Bei einer derartigen Ausbildung ist es möglich, daß die Kautschukmischung über eine große Oberfläche wirksam zu entgasen.

In der Zeichnung sind zwei Ausführungsbeispiele der Erfindung dargestellt und werden im Folgenden beschrieben. Es zeigen:
- Fig. 1: einen Querschnitt durch einen Zahnradextruder mit Entgasungsöffnungen, die sich in einem Bereich am Umfang der Kammern erstrecken;
- Fig. 2: einen Längsschnitt im Bereich der Entgasungsöffnungen durch den Zahnradextruder gemäß Fig. 1, in dessen Zahnräder mit einer Schrägverzahnung versehen sind;
- Fig. 3: einen Längsschnitt im Bereich der Entgasungsöffnungen durch den Zahnradextruder gemäß Fig. 1, bei dessen Zahnräder mit einer Pfeilverzahnung versehen sind;
- Fig. 4: einen doppelten Zahnradextruder, bei dem Entgasungsöffnungen in einem Bereich angeordnet sind, in dem die Verzahnungen außer Eingriff kommen;
- Fig. 5: einen Längsschnitt im Bereich der Entgasungsöffnungen durch den Zahnradextruder gemäß Fig. 4.

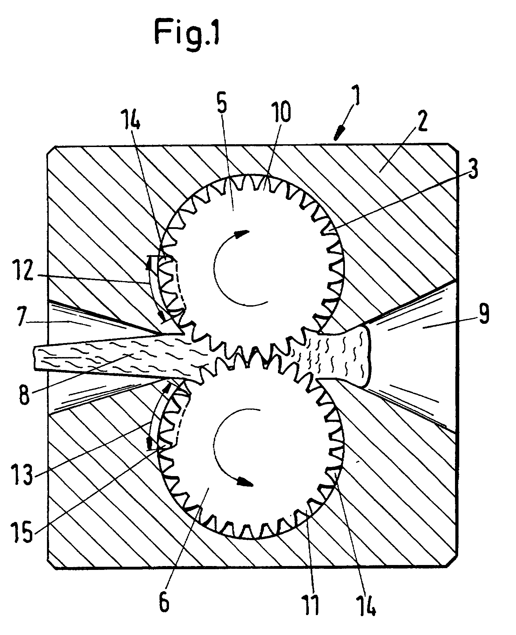

In der Fig. 1 ist mit 1 ein Zahnradextruder bezeichnet, in dessen Extrudergehäuse 2 in zwei Kammern 3 und 4 zwei Zahnräder 5 und 6 angeordnet sind. Vor den Zahnrädern 5 und 6 ist im Extrudergehäuse 2 eine Zuführöffnung 7 für eine Kautschukmischung 8 vorgesehen.

Rückseitig ist im Extrudergehäuse 2 eine Austrittsöffnung 9 für die im Zahnradextruder 1 plastifizierte und homogenisierte Kautschukmischung 8 vorgesehen. Vor der Austrittsöffnung 9 kann gegebenenfalls ein in der Zeichnung nicht dargestellter Spritzkopf angeordnet sein.

Die Zahnräder 5 und 6 werden von einem in der Zeichnung nicht dargestellten Antrieb in Richtung der Pfeile angetrieben, wobei deren Verzahnungen 10 und 11 ineinander greifen.

Bei dem in der Fig. 1 dargestellten Zahnradextruder 1 sind bei sich eintrittsseitig über den Umfang der Kammern 3 und 4 erstreckenden Bereichen 12 und 13 im Extrudergehäuse 2 Entgasungsöffnungen 14 und 15 vorgesehen.

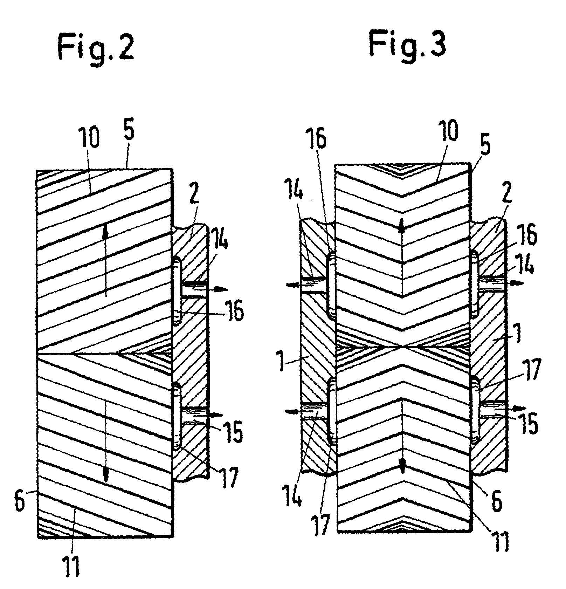

Wie aus der Fig. 2 der Zeichnung ersichtlich ist, sind in diesem Ausführungsbeispiel die Entgasungsöffnungen 14 und 15 einseitig der Zahnräder 5 und 6 angeordnet. Die Entgasungsöffnungen 14 und 15 sind in den Bereichen 12 und 13 der Verzahnungen 10 und 11 als sich über einen Teil des Umfangs erstrekkende Taschen 16 und 17 ausgebildet. Außerdem sind die Verzahnungen 10 und 11 der Zahnräder 5 und 6 als Schrägverzahnungen ausgebildet. Die Schrägverzahnungen sind so gerichtet, daß die Kautschukmischung 8 in den Verzahnungen 10 und 11 von den stirnseitig angeordneten Taschen 16 und 17 der Entgasungsöffnungen 15 und 16 wegbewegt wird.

Bei dem in der Fig. 3 dargestellten Ausführungsbeispiel sind die Entgasungsöffnungen 15 und 16 in den Bereichen 12 und 13 beidseitig der Verzahnungen 10 und 11 der Zahnräder 5 und 6 angeordnet. Die Verzahnungen 10 und 11 sind dabei als Pfeilverzahnung ausgebildet, die so ausgerichtet ist , daß die Kautschukmischung 8 in den Verzahnungen 10 und 11 von den Stirnflächen der Zahnräder 5 und 6, d.h. von den Taschen 16 und 17 der Entgasungsöffnungen 14 und 15 wegbewegt wird. Es wird so auch hier verhindert, daß die Kautschukmischung 8 in die Entgasungsöffnungen 14 und 15 eintreten und diese verstopfen kann.

Bei dem in den Fig. 1 bis 3 dargestellten Ausführungsbeispielen der Erfindung wird die Kautschukmischung 8 in die Zuführöffnung 7 des Zahnradextruders 1 in Form eines Fütterstreifens zugeführt. Die Kautschukmasse 8 wird dann von den Verzahnungen 10 und 11 der in Pfeilrichtung angetriebenen Zahnräder 5 und 6 erfaßt. Dabei gelangt die Kautschukmischung 8 in die Zwischenräume der Verzahnungen 10 und 11 im Bereich der Kammern 3 und 4. Das Kautschukmaterial wird von den Verzahnungen 10 und 11 an den Wandungen der Kammern 3 und 4 entlang geführt, wobei Energie eingeleitet und die Kautschukmischung 8 plastifiziert wird. Gleichzeitig erfolgt über die eintrittsseitig in den Bereichen 12 und 13 an den Verzahnungen 10 und 11 angeordneten Entgasungsöffnungen 14 und 15 eine intensive Entgasung der Kautschukmischung 8. Die entgaste Kautschukmischung 8 gelangt dann in die Austrittsöffnung 9 des Zahnradextruders 1, wo ein Massedruck für die Ausformung des Extrudates aufgebaut wird. Über einen in der Zeichnung nicht dargestellten Spritzkopf können auch hochwertige Profile extrudiert werden.

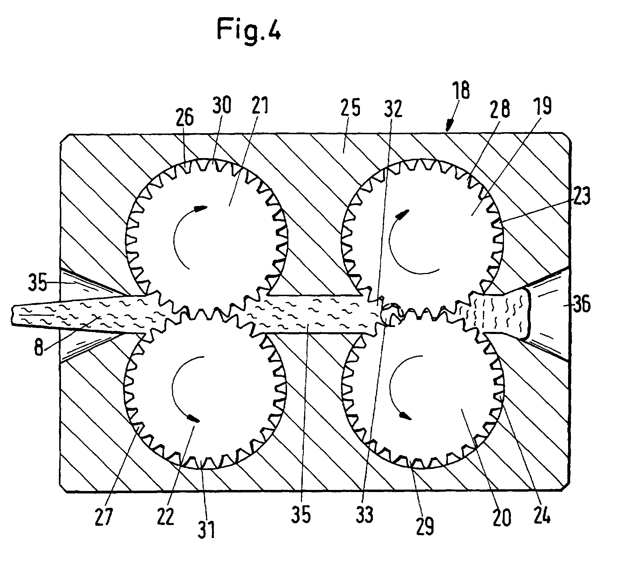

In der Fig. 4 der Zeichnung ist ein doppelter Zahnradextruder 18 dargestellt, der zwei gleichsinnig angetriebene Zahnradpaare aufweist, die von Zahnrädern 19, 20 und 21, 22 gebildet sind. Die Zahnräder 19 und 20 sind in Kammern 23 und 24 eines Gehäuses 25 des Zahnradextruders 18 angeordnet. Die Zahnräder 21 und 22 sind in Kammern 26 und 27 des Gehäuses 25 angeordnet. Die Zahnräder 19 und 20 weisen Verzahnungen 28 und 29 auf. Die Zahnräder 21 und 22 sind mit Verzahnungen 30 und 31 versehen.

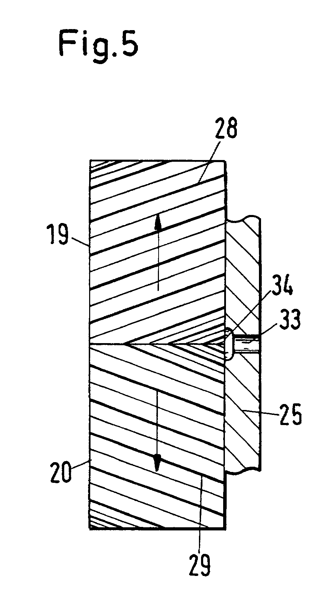

Im Extrudergehäuse 25 ist stirnseitig der Verzahnungen 28 und 29 der Zahnräder 19 und 20 in einem Bereich 32, in dem die Verzahnungen 28 und 29 außer Eingriff kommen, eine Entgasungsöffnung 33 vorgesehen. Wie aus der Fig. 5 ersichtlich ist, weist die Entgasungsöffnung 33 stirnseitig der Verzahnungen 28 und 29 eine Tasche 34 auf.

Der Zahnradextruder 18 weist eine Einlaßöffnung 35 auf, über die die Kautschukmischung 8 in Form von Fütterstreifen den Zahnrädern 21 und 22 zugeführt wird. An die Zahnräder 21 und 22 schließt sich ein im Gehäuse 25 angeordneter Kanal 36 an, der eine Austragszone für die in den Verzahnungen 30 und 31 der Zahnräder 21 und 22 plastifizierte und homogenisierte Kautschukmischung 8 bildet.

Der Kanal 35 mündet in einem Bereich 32, d.h. in der Einzugszone der Zahnräder 19 und 20 des Zahnradextruders 18. Die homogenisierte und vorverdichtete Kautschukmischung 8 wird hier von den Verzahnungen 28 und 29 der Zahnräder 19 und 20 erfaßt. In den Verzahnungen 28 und 29 der Zahnräder 19 und 20 wird die Kautschukmischung 8 abschließend plastifiziert und homogenisiert und gelangt schließlich in die eine Austragszone des Zahnradextruders 18 bildende Austrittsöffnung 36. In der Austrittsöffnung 36 wird der Massedruck für die Ausformung des Extrudates aufgebaut. Wie bereits bei dem Ausführungsbeispiel gemäß Fig. 1 beschrieben, kann auch hier gegebenenfalls ein in der Zeichnung nicht dargestellter Spritzkopf angeordnet sein, der die Ausformung eines Profils ermöglicht.

Durch die Anordnung der Entgasungsöffnung 33 im Bereich 32, in dem die Verzahnungen 28 und 29 der in Pfeilrichtung angetriebenen Zahnräder 19 und 20 außer Eingriff kommen, wird der in diesem Bereich 32 auftretende Druckabfall in vorteilhafter Weise zur Entgasung des von den Zahnrädern 21 und 22 vorverdichteten Kautschukmaterials 8 genutzt. Wie aus der Fig. 5 ersichtlich, sind die Verzahnungen 28 und 29 vorzugsweise als Schrägverzahnung ausgebildet. Hierdurch wird erreicht, daß die Kautschukmischung 8 in den Verzahnungen 28 und 29 von der stimseitig angeordneten Entgasungsöffnung 33 wegbewegt wird. Wie sich gezeigt hat, ist die Anordnung einer Schrägverzahnung nicht unbedingt erforderlich, stellt jedoch eine zusätzliche Absicherung dar, die ein evtl. Eintreten der Kautschukmischung 8 in die Entgasungsöffnung 33 verhindert. Ein Zusetzen der Entgasungsöffnung 33 wird so sicher vermieden.

Ergänzend wird darauf hingewiesen, daß auch bei dem Ausführungsbeispiel gemäß der Fig. 4 die Zahnräder 19 und 20 analog zu dem Ausführungsbeispiel gemäß Fig. 3 mit einer Pfeilverzahnung versehen seien können. Hier können dann in dem Bereich 32 beidseitig der Verzahnungen 28 und 29 Entgasungsöffnungen vorgesehen sein. Die Intensität der Entgasung des Kautschukmaterials 8 kann so gegebenenfalls weiter gesteigert werden.

Grundsätzlich wird durch die Anordnung von zwei Zahnradpaaren gemäß dem in der Fig. 4 dargestellten Ausführungsbeispiel ein sehr konstanter Volumenstrom erzielt, wobei in die extrudierte Kautschukmischung 8 eine gleichmäßige Energieeinleitung erfolgt. Hieraus ergibt sich der zusätzliche große Vorteil, daß in einem dem erfindungsgemäßen Zahnradextruder 18 nachgeschalteten Extrusionskopf, der in der Zeichnung nicht dargestellt ist, gegebenenfalls Profile mit hoher Dimensionsstabilität erzeugt werden können. Die Tatsache erweitert den Einsatzbereich des Zahnradextruders 18 erheblich. Auch hochwertige Profile können somit unter Nutzung der bekannten Vorteile der Zahnradextruder kostengünstig gefertigt werden. Insbesondere ermöglicht die erfindungsgemäße intensive Entgasung der Kautschukmischung 8 die Herstellung porenfreier Profile.

Die Vorteile eines Zahnradextrudersystems liegen im übrigen auch in den niedrigen Anschaffungskosten sowie in dem ca. 70 % unter dem eines vergleichbaren Schneckenextruders liegenden Energiebedarf. Außerdem erfordert das System eine vergleichsweise sehr kleine Aufstellungsfläche. Grundsätzlich ist es nunmehr möglich geworden, alle diese Vorteile auch für die Extrusion hochwertiger porenfreier Profile zu nutzen.

## Patentansprüche

1. Zahnradextruder (1, 18) zum Plastifizieren und Homogenisieren von Kautschukmischungen (8) mit zwei in Kammern (3, 4, 23, 24) des Extrudergehäuses (2, 25) angeordneten Zahnrädern (5, 6, 19, 20), deren Verzahnungen (10, 11, 28, 29) ineinander greifen und mit einer vor den Zahnrädern (5, 6, 19, 20) im Extrudergehäuse (2, 25) vorgesehenen Zuführöffnung (7, 35) für die Kautschukmischung (8), **dadurch gekennzeichnet, daß** im Extrudergehäuse (25) stirnseitig der Verzahnungen (10, 11, 28, 29) der Zahnräder (5, 6, 19, 20) in einem Bereich (32), in dem die Verzahnungen (28, 29) außer Eingriff kommen oder/und daß eintrittsseitig der mit der Kautschukmischung (8) gefüllten Verzahnungen (10, 11) in einem sich eintrittsseitig über maximal die Hälfte des Umfangs der Kammern (3, 4) erstreckenden Bereich (13), im Extrudergehäuse (2) Entgasungsöffnungen (14, 15) vorgesehen sind.

2. Zahnradextruder (1, 18) nach Anspruch 1, **dadurch gekennzeichnet, daß** die Entgasungsöffnungen (14, 15, 33) einseitig der Zahnräder (5, 6, 19, 20) angeordnet sind und daß die Verzahnungen (10, 11, 28, 29) der Zahnräder (5, 6, 19, 20) als Schrägverzahnung ausgebildet und so gerichtet sind, daß die Kautschukmischung (8) in den Verzahnungen (10, 11, 28, 29) von den stimseitig angeordneten Entgasungsöffnungen (14, 15, 33) wegbewegt wird.

3. Zahnradextruder (1, 18) nach Anspruch 1, **dadurch gekennzeichnet, daß** die Entgasungsöffnungen (14, 15) beidseitig der Zahnräder (5, 6) angeordnet sind, und daß die Verzahnung der Zahnräder als Pfeilverzahnung ausgebildet und so gerichtet sind, daß die Kautschukmischung (8) in den Verzahnungen (10, 11) von den Stirnflächen, d.h. von den Entgasungsöffnungen (14, 15) wegbewegt wird.

4. Zahnradextruder (18) nach Anspruch 1 und einem oder mehreren der weiteren Ansprüche, **dadurch gekennzeichnet, daß** die Entgasungsöffnung (33), die in dem Bereich (32) angeordnet ist in dem die Verzahnungen (28, 29) außer Eingriff kommen, als Bohrung ausgebildet ist.

5. Zahnradextruder (1) nach Anspruch 1 und einem oder mehreren der weiteren Ansprüche, **dadurch gekennzeichnet, daß** die im Umfangsbereich der Kammern (3, 4) angeordneten Entgasungsöffnungen (14, 15) als Taschen (16, 17) ausgebildet sind, die sich über einen Bereich (12, 13) des Umfangs erstrecken, der mehreren Zähnen der Verzahnung (10, 11) der Zahnräder (5, 6) entspricht.

## Claims

1. A gear extruder (1, 18) for plasticising and homogenising rubber mixes (8), comprising two gear wheels (5, 6, 19, 20) arranged in chambers (3, 4, 23, 24) of the extruder housing (2, 25), the teeth (10, 11, 28, 29) of which intermesh, and comprising a feed opening (7, 35) for the rubber mix (8) which is provided in front of the gear wheels (5, 6, 19, 20) in the extruder housing (2, 25), **characterised in that** venting openings (14, 15) are provided in the extruder housing (25) on the end face of the teeth (10, 11, 28, 29) of the gear wheels (5, 6, 19, 20) in a region (32) in which the teeth (28, 29) become disengaged or/and that on the entry side of the teeth (10,11) filled with the rubber mix (8) in a region (13) extending on the entry side over at most half of the periphery of the chambers (3, 4) venting openings (14, 15) are provided in the extruder housing (2).

2. A gear extruder (1, 18) according to Claim 1, **characterised in that** the venting openings (14, 15, 33) are arranged on one side of the gear wheels (5, 6, 19, 20) and that the teeth (10, 11, 28, 29) of the gear wheels (5, 6, 19, 20) are in the form of helical gearing and are directed such that the rubber mix (8) in the teeth (10, 11, 28, 29) is moved away from the venting openings (14, 15, 33) arranged on the end face.

3. A gear extruder (1, 18) according to Claim 1, **characterised in that** the venting openings (14, 15) are arranged on both sides of the gear wheels (5, 6) and that the teeth of the gear wheels are in the form of herringbone gearing and are directed such that the rubber mix (8) in the teeth (10, 11) is moved away from the end faces, i.e. from the venting openings (14, 15).

4. A gear extruder (18) according to Claim 1 and one or more of the following claims, **characterised in that** the venting opening (33) which is arranged in the region (32) in which the teeth (28, 29) become disengaged is in the form of a bore.

5. A gear extruder (1) according to Claim 1 and one or more of the following claims, **characterised in that** the venting openings (14, 15) located in the peripheral region of the chambers (3, 4) are in the form of pockets (16, 17) which extend over a region (12, 13) of the periphery which corresponds to a plurality of individual teeth of the teeth (10,11) of the gear wheels (5, 6).

## Revendications

1. Extrudeuse à roues dentées (1, 18) pour plastifier et homogénéiser des mélanges de caoutchouc (8), comportant deux roues dentées (5, 6, 19, 20) agencées dans des chambres (3, 4, 23, 24) du carter de l'extrudeuse (2, 25), dont les dentures (10, 11, 28, 29) s'engagent les unes dans les autres, et une ouverture d'amenée (7, 35), prévue avant les roues dentées (5, 6, 19, 20) dans le carter (2, 25) de l'extrudeuse, pour le mélange de caoutchouc (8),
**caractérisée en ce que** des ouvertures de dégazage (14, 15) sont prévues dans le carter (25) de l'extrudeuse frontalement aux dentures (10, 11, 28, 29) des roues dentées (5, 6, 19, 20) dans une zone (32), dans laquelle les dentures (28, 29) viennent hors d'engagement et/ou du côté d'entrée des dentures (10, 11) remplies par le mélange de caoutchouc (8) dans une zone (13) s'étendant du côté d'entrée sur au maximum la moitié de la périphérie des chambres (3, 4), dans le carter (2) de l'extrudeuse.

2. Extrudeuse à roues dentées (1, 18) selon la revendication 1,
**caractérisée en ce que** les ouvertures de dégazage (14, 15, 33) sont agencées d'un côté des roues dentées (5, 6, 19, 20), et **en ce que** les dentures (10, 11, 28, 29) des roues dentées (5, 6, 19, 20) sont réalisées comme dentures hélicoïdales et sont orientées de sorte que le mélange de caoutchouc (8) est éloigné dans les dentures (10, 11, 28, 29) des ouvertures de dégazage (14, 15, 33) agencées de façon frontale.

3. Extrudeuse à roues dentées (1, 18) selon la revendication 1,
**caractérisée en ce que** les ouvertures de dégazage (14, 15) sont agencées des deux côtés des roues dentées (5, 6), et **en ce que** les dentures des roues dentées sont réalisées comme dentures à chevrons et sont orientées de sorte que le mélange de caoutchouc (8) est éloigné dans les dentures (10, 11) des surfaces frontales, c'est-à-dire des ouvertures de dégazage (14, 15).

4. Extrudeuse à roues dentées (18) selon la revendication 1 et une ou plusieurs des autres revendications,
**caractérisée en ce que** l'ouverture de dégazage (33), qui est prévue dans la zone (32) dans laquelle les dentures (28, 29) viennent hors d'engagement, est réalisée comme perçage.

5. Extrudeuse à roues dentées (1) selon la revendication 1 et une ou plusieurs des autres revendications,
**caractérisée en ce que** les ouvertures de dégazage (14, 15) agencées dans la zone périphérique des chambres (3, 4) sont réalisées comme poches (16, 17) qui s'étendent sur une zone (12, 13) de la périphérie qui correspond à plusieurs dents de la denture (10, 11) des roues dentées (5, 6).
